Europäisches Patentamt

European Patent Office

Office européen des brevets

(11) Publication number : **0 644 480 A2**

# (12) EUROPEAN PATENT APPLICATION

(21) Application number : 94303702.8

(22) Date of filing : 24.05.94

(51) Int. Cl.⁶ : **G06F 7/49, H03K 23/00, H01L 29/73**

(30) Priority : **24.05.93 US 66455**

(43) Date of publication of application :
**22.03.95 Bulletin 95/12**

(84) Designated Contracting States :
**DE FR GB IT NL**

(71) Applicant : **TEXAS INSTRUMENTS
INCORPORATED**
**13500 North Central Expressway**
**Dallas Texas 75265 (US)**

(72) Inventor : **Taddiken, Albert H.**
**105 Settlers Bend**
**McKinney, TX 75069 (US)**

(74) Representative : **Nettleton, John Victor et al**
**Abel & Imray**
**Northumberland House**
**303-306 High Holborn**
**London, WC1V 7LH (GB)**

(54) **Multiple resonant tunneling circuits for positive digit multi-valued logic operations.**

(57) Multiple resonant tunneling devices offer significant advantages for realizing ultra-dense, ultra-high performance multivalued logic arithmetic integrated circuits. A multivalued logic adder is disclosed, wherein two numbers represented by positive digit base-M range-N words are added by two-input summation circuits **40** which sum corresponding digits, then the digit sums are decomposed into a binary representation by range-7 multivalued to binary converter circuits **42**, then three-input summation circuits **44** sum appropriate bits of the binary representations to calculate the digits of a positive digit base-2 range-4 word whose value is the sum of the two numbers. Preferably, the decomposition to binary representation is performed by multi-valued folding circuits **56** which are connected by voltage divider circuitry. Preferably, the multi-valued folding circuits contain multiple-peak resonant tunneling transistors **54**. Ripple carries are eliminated and the speed of the adder is independent of input word width.

Fig.2

**Field of the Invention**

This invention generally relates to integrated circuit devices and more particularly to multivalued logic circuits comprising resonant tunneling devices.

**Background of the Invention**

Without limiting the scope of the invention, its background is described in connection with resonant tunneling devices and multivalued logic.

Resonant Tunneling Devices

Within the last decade, heteroepitaxial technology has allowed researchers to explore the electrical properties of a variety of superlattice, quantum well, and resonant tunneling structures. The first proposals and investigations of the resonant tunneling diode (hereinafter referred to as a RTD) were reported by Chang, Esaki, and Tsu (*Applied Physics Letters*, 24, p. 593) and subsequently given impetus by Sollner et al. (*Applied Physics Letters*, 43, p.588) who observed large negative differential resistance (hereinafter referred to as NDR) in these structures. Because only discrete energy states are available for charge transport through quantum wells, the current-voltage relationship of a resonant tunneling diode may exhibit a peak, i.e., for applied voltages increasing from zero, the diode current increases, then decreases for a range of larger applied voltages. Multiple peak resonant tunneling devices (hereinafter referred to as M-RTD) consisting of series combinations of RTDs in epitaxial stacks have also been demonstrated. Fifteen resonant peaks were achieved in a single heterostructure at room temperature recently fabricated at Texas Instruments.

Since the initial investigations of the RTD, many three-terminal resonant tunneling devices have been proposed and demonstrated (see, for example, F. Capasso, S. Sen and F. Beltram, *High Speed Semiconductor Devices* (S.M. Sze, ed.), p. 465, John Wiley & Sons, New York). Integration of RTDs into one or another of the terminals of conventional transistors has led to a large family of resonant tunneling transistors. Among the most promising of these transistors are: the resonant tunneling bipolar transistor (RTBT) (see, for example, F. Capasso, S. Sen, and A.Y. Cho, *Applied Physics Letters*, 51, p. 526); the resonant tunneling hot electron transistor (RHET) (see, for example, N. Yokoyama et al., *Solid State Electronics*, 31, p. 577); and the resonant tunneling field effect transistor (RTFET). These devices are fabricated by placing RTDs in the emitter terminals of heterojunction bipolar transistors, hot electron transistors or field effect transistors, respectively.

Nanoelectronic devices, such as resonant tunneling diodes and transistors, are under investigation in many laboratories for their potential to operate at dimensions much smaller than conventional transistors can function. The goal of these device designs is to harness the quantum effects themselves to allow scaling to dimensions on a nanometer scale. Examples of such nanoelectronic devices are described, for example, in:

U.S. Patent No. 4,581,621, "Quantum Device Output Switch", issued April 8, 1986, to Reed;

U.S. Patent No. 4,704,622, "Negative Transconductance Device", issued November 3, 1987, to Capasso et al.;

U.S. Patent No. 4,721,983, "Three Terminal Tunneling Device", issued January 26, 1988, to Frazier;

U.S. Patent No. 4,849,799, "Resonant Tunneling Transistor", issued July 18, 1989, to Capasso et al.;

U.S. Patent No. 4,851,886, "Binary Superlattice Tunneling Device and Method", issued July 25, 1989, to Lee et al.;

U.S. Patent No. 4,853,753, "Resonant-Tunneling Device, and Mode of Device Operation", issued August 1, 1989, to Capasso et al.;

U.S. Patent No. 4,912,531, "Three-Terminal Quantum Device", issued March 27, 1990, to Reed et al.;

U.S. Patent No. 4,959,696, "Three Terminal Tunneling Device and Method", issued September 25, 1990, to Frensley et al.; and

U.S. Patent No. 4,999,697, "Sequential-Quenching Resonant-Tunneling Transistor", issued March 12, 1991, to Capasso et al.

Multivalued Logic

Binary arithmetic integrated circuits (ICs) have enabled a revolution in the performance of embedded coprocessors and high-performance computers, but scaling limits will ultimately prevent further increases in the speed and density of conventional ICs. Soon after the year 2000, quantum mechanical effects will set fundamental limits on the scalability of conventional transistors (see, for example, R.T. Bate, *Nanotechnology*, 1, p. 1, 1990). Feature sizes less than approximately 0.1 $\mu$m will cause leakage in conventional devices that will prevent scaling from increasing IC performance.

In the future, ultra-high performance digital systems will require clock rates in excess of 10 GHz with minimum data latency. Current systems, using binary computation based on silicon VLSI technology, can achieve reasonably good performance by using complex carry-ripple reduction schemes; however, data latency and ultra-fast computing requirements will make this approach unsuitable for certain classes of systems.

Multivalued Logic (hereinafter referred to as MVL) circuits have the potential for increased speed and density (for the same minimum feature geometry) since multiple binary bits may be simultaneously processed in a single MVL circuit. For examples of multivalued logic adders and multipliers which offer ripple-carry free operation through the use of redundant number systems, see, for example: L. J. Micheel, *Proceedings of the International Symposium on MVL*, 1992; J. Goto et al., *International Solid State Circuits Conference*, 1991; and S. Kawahito, K. Mizuno, and T. Nakamura, *Proceedings of the International Symposium on MVL*, 1991. To date, implementation of these approaches has been proposed based on conventional integrated circuit families (e.g. CMOS and heterojunction ECL).

## Summary of the Invention

Conventional technologies (e.g. CMOS and heterojunction ECL) seem an unnatural choice for the implementation of MVL ICs due to the complex circuits and high component counts required. An efficient, dense, simple and fast means of implementing multivalued logic operations is highly desired.

It has been discovered that the multiple resonant tunneling devices offer significant advantages for realizing ultra-dense, ultra-high performance multivalued logic arithmetic integrated circuits. Resonant tunneling devices have novel characteristics that will enable ultra-high speed and ultra-high density circuits even before the quantum scaling limits are reached. Multivalued logic circuits implemented with resonant tunneling devices will achieve increased speed and density over binary circuits and multiple-valued circuits implemented in conventional IC technologies since multiple binary bits are very efficiently processed by architectures which make use of devices exhibiting multiple negative transconductance regions.

Generally, and in one form of the invention, two numbers represented by positive digit base-M range-N words are added by two-input summation circuits which sum corresponding digits, then the digit sums are decomposed into a binary representation by range-7 multivalued to binary converter circuits, then three-input summation circuits sum appropriate bits of the binary representations to calculate the digits of a positive digit range-4 base-2 word whose value is the sum of the two input numbers. Preferably, the decomposition to binary representation is performed by multi-valued folding circuits which are connected by voltage divider circuitry. Preferably, the multi-valued folding circuits contain multiple-peak resonant tunneling transistors.

This is apparently the first circuit for adding base-M range-N words which incorporates one or more negative differential resistance devices.

The adder of the present invention provides several technical advantages over prior art adders. For example, the novel adders described herein are faster and denser than conventional adders. Ripple carries are eliminated by the preferred embodiments described herein. The speed of the circuit is independent of input word width. Other technical advantages will be readily apparent to one skilled in the art from the following descriptions, figures and claims.

## Brief Description of the Drawings

The novel features believed characteristic of the invention are set forth in the appended claims. The invention itself, however, as well as other features and advantages thereof, will be best understood by reference to the detailed description which follows, read in conjunction with the accompanying drawings.

In the drawings:

FIGURE 1 is the block diagram of the first preferred embodiment of a redundant positive digit base-2 range-4 adder;

FIGURE 2 is a schematic of the first preferred embodiment of a range-7 multivalued-to-binary converter circuit.

FIGURE 3 is graph of the transfer function of the first preferred embodiment of a range-7 multivalued-to-binary converter circuit.

FIGURE 4 is a graph of the current-voltage characteristic of a typical resonant tunneling diode.

FIGUREs 5a - 5c are conduction band energy diagrams of a typical resonant tunneling diode with increasing applied voltages.

FIGURE 6 is a graph of the current-voltage characteristic of an eight-peak resonant tunneling diode.

FIGURE 7 is a schematic of a folding circuit which implements one output of the range-7 multivalued-to-binary converter.

FIGURE 8a is a graph showing the intersections of the current-voltage characteristic of the multiple-peak resonant tunneling transistor with the load line of the active load of FIGURE 7.

FIGURE 8b is a graph of the transfer function of the folding circuit of FIGURE 7.

FIGURE 9 is a graph of the current-voltage characteristic of a demonstrated three-peak resonant tunneling diode.

FIGURE 10 is a schematic of the first preferred embodiment of a two-input summation circuit.

FIGURE 11 is a schematic of the first preferred embodiment of a three-input summation circuit.

FIGURE 12 is the block diagram of the second preferred embodiment of a redundant positive digit range-4 base-2 adder;

FIGURE 13 is the schematic of the second preferred embodiment of a range-7 multivalued-to-binary converter circuit.

FIGURE 14 is a graph of the transfer function of the second preferred embodiment of a range-7 multivalued-to-binary converter circuit.

FIGURE 15 is a schematic of the second preferred embodiment of a two-input summation circuit.

FIGURE 16 is a schematic of the second preferred embodiment of a three-input summation circuit.

Corresponding numerals and symbols in the different figures refer to corresponding parts unless otherwise indicated.

## Detailed Description of the Preferred Embodiments

The advantages of multivalued logic arithmetic are illustrated in the following example. In most conventional digital processors, numbers are represented in a base-2 range-2 numeration system. That is, the unit value of each digit increases in base-2 progression (1, 2, 4, 8, etc.), and each digit may take on one of only two values (0 or 1). Conventional digital processor architectures can add pairs of N-bit numbers in a single processor cycle. However, time delays occur during binary addition because carry bits must propagate through the adder circuitry. Carry propagation delays set an upper limit on processor performance. For example, adding the following numbers in base-2 range-2 representation using simple binary arithmetic requires the long-distance propagation of a carry bit across the entire addition chain:

$$01111 = 15(\text{base } 10)$$

$$\underline{+\ 00001} = \ 1(\text{base } 10)$$

$$10000 = 1*(16) + 0*(8) + 0*(4) + 0*(2) + 0*(1) = 16(\text{base } 10)$$

$$<\text{----}\ \text{carry}$$

The carry propagation problem can be eliminated if data operands are encoded and processed using a multivalued representation. This approach uses a higher range to represent information so that ripple carries are never produced, and carry propagation delays are eliminated. The numbers from the previous example can be added without the need for carry generation when represented in base-2 range-3, where each column of bits is separately added using numerical rather than binary addition. The range-3 representation of the result makes carry ripple unnecessary:

$$01111 = 15(\text{base } 10)$$

$$\underline{+\ 00001} = \ 1(\text{base } 10)$$

$$01112 = 0*(16) + 1*(8) + 1*(4) + 1*(2) + 2*(1) = 16(\text{base } 10)$$

It is important to note that, even though the range of the result is higher, the base of the number system used to represent the result has not changed. That is, the unit value of each digit position still increases in the base-2 progression of 1, 2, 4, 8, and so on. The use of range-N numeration to encode information in base-M progression is called redundant digit M,N coding. If the digits may take on only positive values, then the numeration system is referred to as redundant positive digit M,N coding. The numeration system of the example above is therefore redundant positive digit 2,3 coding. A numeration system which allows positive and negative digit values is referred to as redundant signed digit M,N coding.

It has been discovered that the scaling and speed advantages of the redundant digit arithmetic concept described above can be realized very efficiently by circuits which make use of the negative differential resistance exhibited by resonant tunneling devices.

First Preferred Embodiment

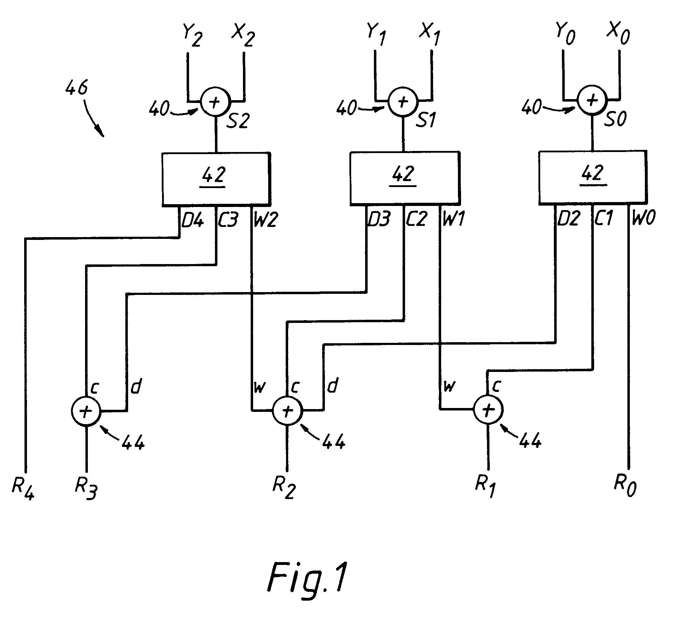

The block diagram a first preferred embodiment of an adder of numbers represented by a redundant positive digit 2,4 coding scheme is shown in Figure 1. Digits may take on the values 0, 1, 2, and 3 (positive digit range-4). The progression of the numeration system is base-2. The block diagram is for input words of up to three digits in word width, although the technique may obviously be extended to arbitrary word widths. Positive redundant digit 2,4 coding is used to represent base-2 information in a redundantly encoded (range-4) representation so that ripple carries are never produced. This means that any output digit, e.g. $R_2$, is completely determined by the first six input digits of equal or lower significance, e.g. $X_2$, $Y_2$, $X_1$, $Y_1$, $X_0$ and $Y_0$. Addition is performed in three steps:

Step 1: $S_i = X_i + Y_i$

Step 2: $4D_{i+2} + 2C_{i+1} + W_i = S_i$

Step 3: $R_i = W_i + C_i + D_i$

where the base-10 value of the result is given by

$$\sum_{i=0}^{n-1} 2^i R_i$$

where n is the number of digits in the output word.

With reference to Figure 1, Pairs of input digits ($X_i$, $Y_i$) are first summed using a two-input summation circuit **40** to produce outputs digit sums $S_i = X_i + Y_i$ (Step 1, above). Each digit sum is then converted into a 3-bit binary code using a range-7 multivalued-to-binary converter (hereinafter referred to as R7MBC) **42**. The R7MBC **42** performs the decomposition function of Step 2, above. Finally, the binary outputs from the adjoining R7MBCs **42** are shared and summed by three-input summation circuits **44** to produce a range-4 output result (Step 3, above). The adder shown can be extended to compute the sum of two numbers of arbitrary word width. The speed of the circuit is independent of the number of input digits because only local intermediate results are shared within the circuit.

For the adder architecture shown in Figure 1, and generally for an circuits **44** will have only two inputs. The three-input summation circuit which produces $R_1$ does not have a 'd' input. While not shown in Figure 1, that input is assumed to have a voltage applied which corresponds to state "0", i.e. the voltage which represents a zero value digit. Similarly, the three-input summation circuit which produces the output digit $R_3$ in Figure 1 has no 'w' input. Again, while not shown in Figure 1, that input is assumed to have a voltage applied which corresponds to state "0", i.e. the voltage which represents a zero value digit.

In the following discussion of the operation of the preferred circuit embodiments, the inputs and outputs will be referred to as states rather than voltages. The voltage corresponding to each state is a design choice and the correspondence between voltage and state will be obvious to one of ordinary skill in the art. In a particular circuit design, for example, each state might differ from the next state by 0.3 volts. In the preferred embodiments of the adder, circuit voltages are generally proportional to the states they represent. It is contemplated that in some alternate embodiments the relationship between voltage and state need not be strictly linear nor strictly proportional.

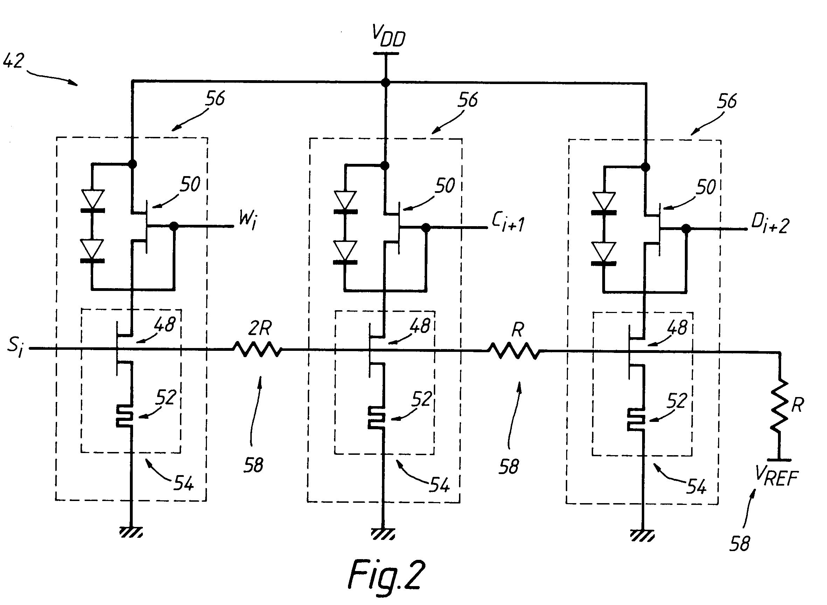

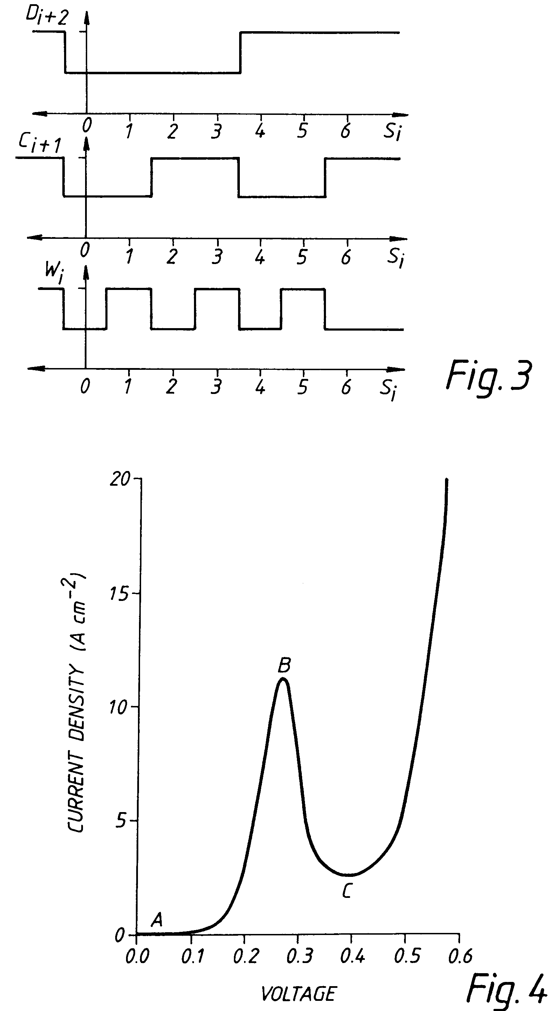

The circuit schematic of the first preferred embodiment of the R7MBC **42** is shown in Figure 2. The corresponding transfer function is shown in Figure 3. This is essentially an analog-to-digital conversion of the range-7 sum $S_i$ and would require a considerable number of conventional transistors to implement. As shown in Figure 3, The R7MBC **42** quantizes the input states "0" through "6" into a binary output code. The circuit of Figure 2 exhibits this transfer function, as described and explained below.

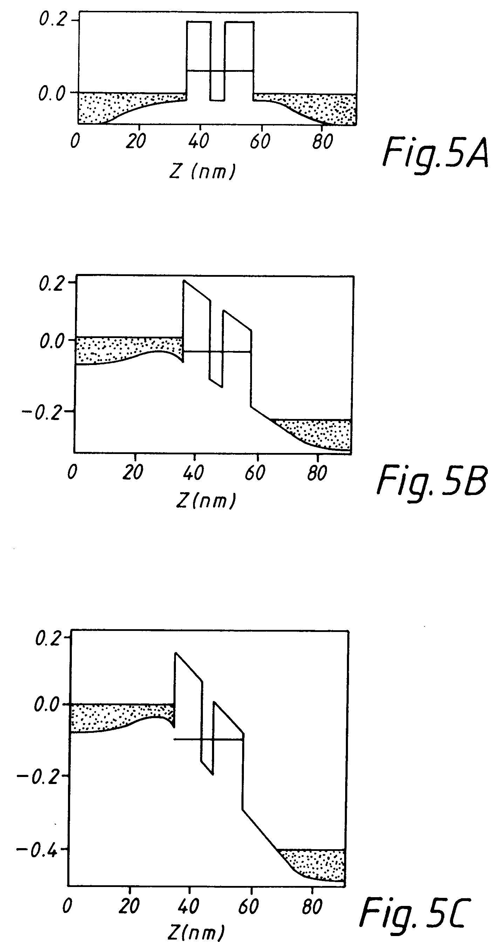

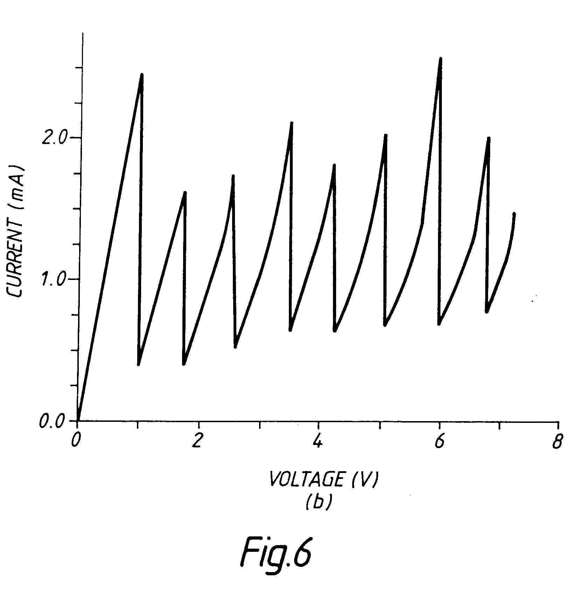

A resonant tunneling device (RTD) is a device which exhibits negative differential resistance due to resonant tunneling of charge carriers through one or more quantum wells. As shown in Figure 4 and Figures 5a-5c, a peak in the I-V curve of an RTD occurs when the applied bias aligns a quantum conduction state within the device with the Fermi level in one electrical contact. Figures 5a, 5b and 5c show the conduction band energy diagrams of the RTD under the applied voltages at points A, B and C in Figure 4, respectively. The position of the I-V peak in bias voltage is adjustable by controlling the heterostructure composition and layer thicknesses used to fabricate the device. RTDs can be integrated in series to produce a multiple peak RTD (M-RTD) with I-V characteristics such as the example I-V characteristic shown in Figure 6. In this example, the eight-peak I-V characteristic was obtained by fabricating a stack of RTDs within the same heterostructure. Again, both the number and bias separation of peaks are controlled parameters in the fabrication process.

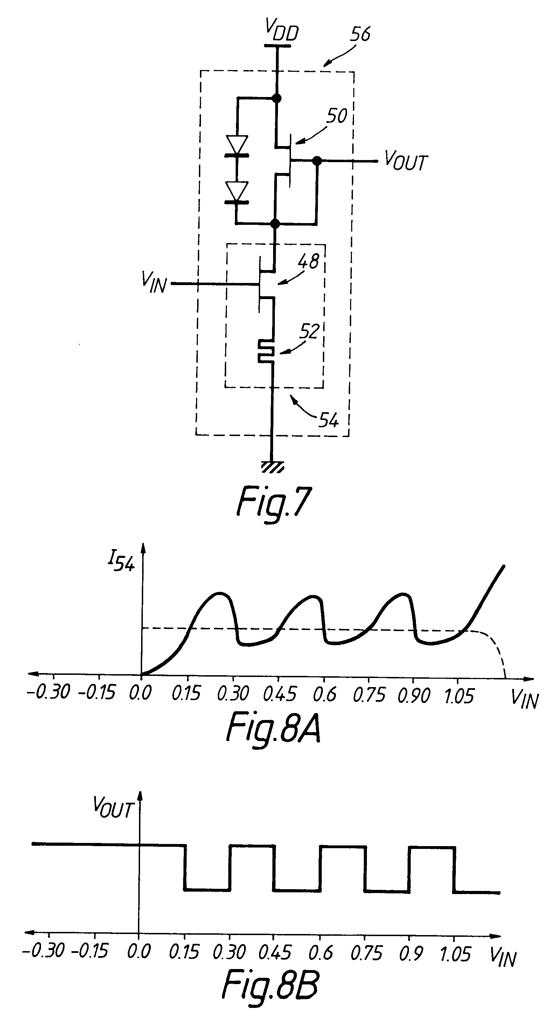

The operation of one output of the first preferred embodiment R7MBC **42** will be explained with reference to Figures 7, 8a and 8b. The first preferred embodiment of the multi-level folding circuit **56** comprises a resonant tunneling transistor **54** and a depletion mode FET **50** which acts as an active load. As shown in Figure 7, the resonant tunneling transistor **54** may be represented by, in this embodiment, switching transistor **48** and a multiple-peak resonant tunneling diode **52**. A resonant tunneling transistor **54** may be, for example, the combination of an FET and a multiple-peak resonant tunneling diode integrated into the FET source, or, alternatively, a discrete FET with an M-RTD or multiple single peak RTDs connected to the source. In the first preferred embodiment, the switching transistor **48** is a depletion mode FET with a 'turn on' voltage $V_t$ of -0.3 V. Figure 8a shows the relationship between the resonant tunneling transistor drain current and Vin. Three resonant peaks are shown, occuring at approximately 0.3, 0.6 and 0.9 V. The dashed line in Figure 8a is the load line of the active load **50**. As shown, the saturation current of the active load **50** transistor is chosen to be less than the peak currents but more than the valley currents of the M-RTD **52**.

As Vin, the gate voltage of the switching transistor **48**, is swept upward from -0.3 V, the output voltage $V_{out}$, which begins high, goes low when Vin reaches $V_{gs,on}$ (the 'on' gate-to-source voltage) of the switching transistor **48** plus the first peak voltage of the M-RTD **52**. As the gate voltage continues to increase, the M-RTD **52** restricts the switching transistor **48** current as it transitions through the NDR region until the gate voltage reaches Vgs,off (the 'off' gate-to-source voltage) plus the first valley voltage of the M-RTD **52** and $V_{out}$ is once again high. For further increases in $V_{in}$, this cycle repeats and the input/output relation is as shown in Figure 8. The diodes shunting the active load transistor **50** 'clamp' the low $V_{out}$ state to prevent the switching transistor **48** from entering its knee (triode) region. As can be seen in Figures 8a and 8b, the saturation current of the active load transistor **50** determines the precise voltage at which $V_{out}$ switches from one output voltage to the other. The first preferred embodiment of the R7MBC **42** is formed from three of these multi-level folding circuits **56** combined using a binary-weighted resistor ladder **58**, as shown in Figure 2, and exhibits the transfer function shown in Figure 3.

The three-peak M-RTD characteristic shown in Figure 8a can be obtained either by a series combination of three RTDs (in a stack or by metal interconnection of single RTDs) or by use of a single coupled quantum well heterostructure. When RTDs are combined in series, the off-resonance RTDs in the chain may introduce an undesirable internal series resistance, $R_S$. This series resistance can cause a voltage hysteresis equal in magnitude to the product of the difference between the peak and valley currents and the difference between the negative differential resistance and the positive series resistance $R_S$. The onset of this hysteresis effect occurs when the accumulated series resistance exceeds the RTD negative differential resistance. The total number of RTDs that can be combined in series, therefore, is generally limited by the accumulated series resistance of the specific device implementation.

The electrical properties of a resonant tunneling device are determined, in part, by the thicknesses, materials, and doping of its constituent layers. An example of a resonant tunneling diode structure which exhibits a three-peak characteristic is given in Table 1. The structure is a stack of epitaxially formed layers, layer 1 formed on the substrate, layer 2 formed on layer 1, etc.

TABLE 1

| Layer Number | Material | Thickness | Description |
|---|---|---|---|
| 1 | InGaAs | 0.5 μm | Cathode contact layer |
| 2, 10, 18 | InGaAs | 500 A | Ohmic layer |
| 3, 11, 19 | InGaAs | 20 A | Spacer layer |
| 4, 12, 20 | AlAs | 20 A | Barrier layer |
| 5, 13, 21 | InGaAs | 10 A | Quantum Well |
| 6, 14, 22 | InAs | 20 A | Notch in Quantum Well |
| 7, 15, 23 | InGaAs | 10 A | Quantum Well |
| 8, 16, 24 | AlAs | 20 A | Barrier Layer |
| 9, 17, 25 | InGaAs | 20 A | Spacer Layer |
| 26 | InGaAs | 500 A | Ohmic Layer |
| 27 | InGaAs | 2500 A | Anode Contact Layer |

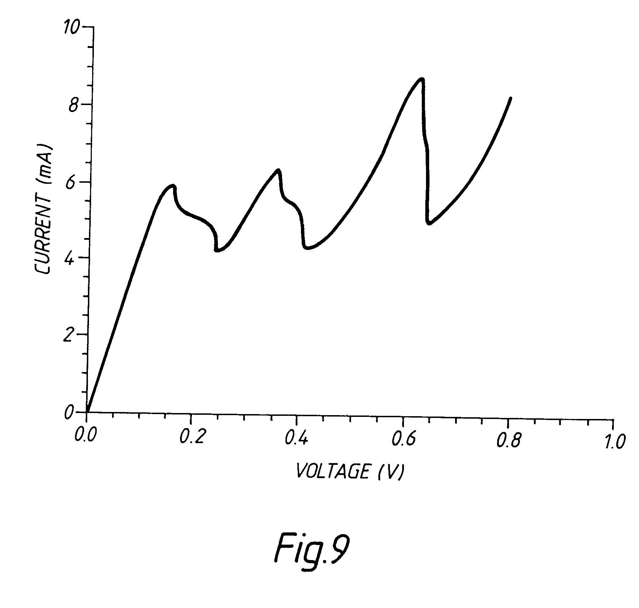

The structure give by Table 1 exhibits the current-voltage characteristic shown in Figure 9. Two traces are present in this figure, although only a single trace is apparent. One trace shows the characteristic for a positive voltage ramp beginning at zero bias, and a second trace begins at 0.8 V and decreases to 0 V. The difference between these curves is less than the 3 mV resolution of the measurement equipment.

To achieve sufficient noise margins in MVL circuitry, the three-peak M-RTDs should generally have relatively equal peak and valley currents, relatively equally spaced peak voltages, modest peak-to-valley ratio, and low hysteresis. Table 2 shows preferred values for some M-RTD parameters.

TABLE 2

| M-RTD Parameter | Preferred Values |
|---|---|
| Peak current variation | $\leq$ 10% |
| Valley current variation | $\leq$ 20% |
| Peak voltage spacing deviation from linearity | $\leq$ 5% |
| Peak-to-valley ratio (PVR) | $\geq$ 4 |
| Hysteresis | $\leq$ 10 mV |

Similarly, preferred values can be given for the FET switching transistor parameters. Table 3 shows preferred values for some FET parameters.

TABLE 3

| FET Parameter | Preferred Values |
|---|---|
| Hysteresis | $\leq$ 20 mV |
| Gate-drain breakdown voltage | 4 V |
| Nominal $V_T$ | -0.3 V |
| $V_T$ local matching | $\leq$ 20 mV |

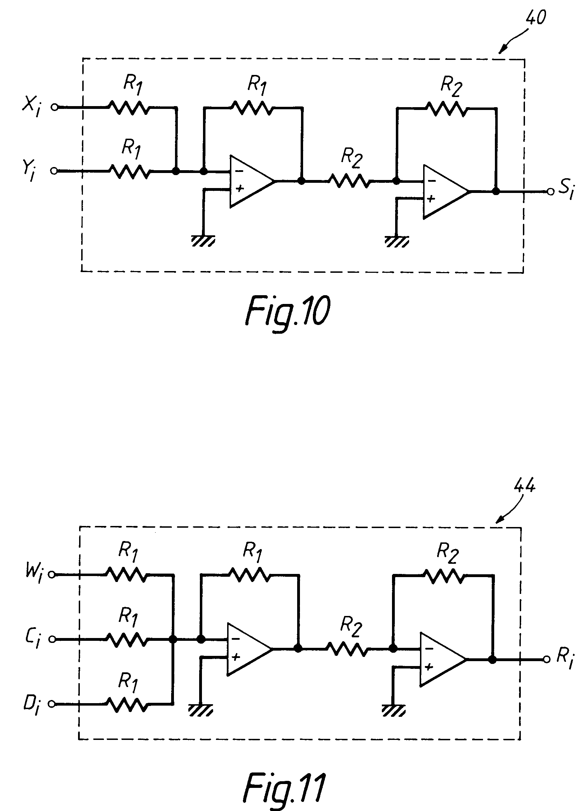

The first preferred embodiment of the two-input summation circuit **40** is shown in Figure 10. The first am-

plifier stage produces $-(X_i + Y_i)$, and the second amplifier stage is an inverter (gain = -1) so that $S_i = X_i + Y_i$.

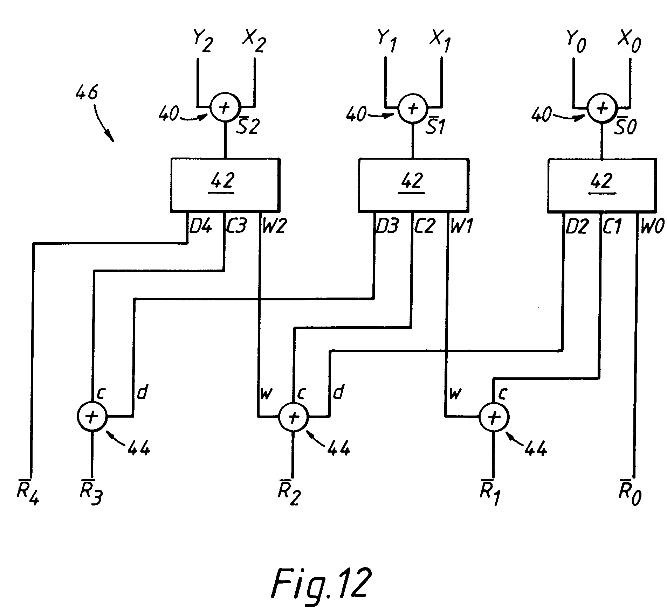

The first preferred embodiment of the three-input summation circuit **44** is shown in Figure 11. The digits of the final range-4 result are generated by summation of the partial sum, $W_i$, the carry from the previous column, $C_i$, and the carry from the second previous column, $D_i$, by using a circuit similar to that shown in Figure 11, but with three inputs such that $R_i = W_i + C_i + D_i$.

## Second Preferred Embodiment

The block diagram of second preferred embodiment for an adder of numbers represented by redundant positive digit 2,4 coding is shown in Figure 12. As in the first preferred embodiment, digits may take on the values 0, 1, 2, and 3 (positive digit range-4). The progression of the numeration system is base-2. The block diagram is for input words of up to three digits in word width, although the technique may obviously be extended to arbitrary word widths. Positive redundant digit 2,4 coding is used to represent base-2 information in a redundantly encoded (range-4) representation so that ripple carries are never produced.

Addition is performed in three steps:

Step 1: $S_i = 6 - (X_i + Y_i)$

Step 2: $4D_{i+2} + 2C_{i+1} + W_i = 6 - S_i$

Step 3: $R_i = 3 - (W_i + C_i + D_i)$

and the base-10 value of the result is given by

$$\sum_{i=0}^{n-1} (3-\overline{R}_i)2^i$$

where n is the number of digits in the output word.

With reference to Figure 12, Pairs of input digits $(X_i, Y_i)$ are first summed using a two-input summation circuit **40** to produce inverted partial sums $S_i = 6 - (X_i + Y_i)$ as in Step 1, above (in positive digit multivalued number systems, the inverse of digit X is defined as M-X, where M is the maximum value a digit is allowed to have. In a positive digit range-7 representation, the inverse of digit X is 6-X). Each partial sum is then converted into an inverted 3-bit binary code using a range-7 multivalued-to-binary converter (R7MBC) **42**. The R7MBC performs the function of Step 2, above. Finally, the binary outputs from the adjoining R7MBCs are shared and summed by three-input summation circuits **44** to produce an inverted range-4 output result digits $R_i$ (Step 3, above). The adder shown can be extended to compute the sum of two numbers of arbitrary word width. The speed of the circuit is independent of the number of input digits because only local intermediate results are shared within the circuit. For the adder architecture shown in Figure 12, and generally when the adder circuit is extended to arbitrary input word width, two of the three-input summation circuits **44** will have only two inputs. The three-input summation circuit which produces $R_1$ does not have a 'd' input. While not shown in Figure 12, that input is assumed to have a voltage applied which corresponds to state "0", i.e. the voltage which represents a zero value digit. Similarly, the three-input summation circuit which produces the output digit $R_3$ in Figure 12 has no 'w' input. Again, while not shown in Figure 12, that input is assumed to have a voltage applied which corresponds to state "0", i.e. the voltage which represents a zero value digit.

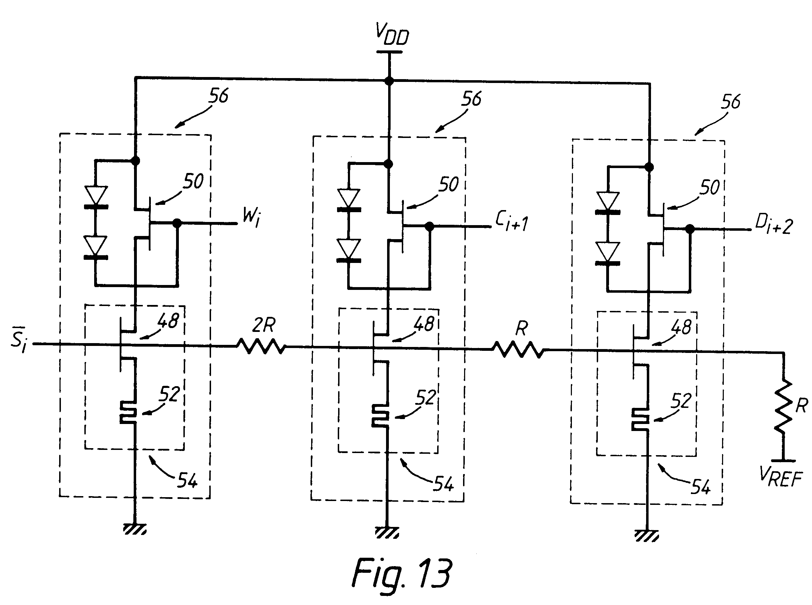

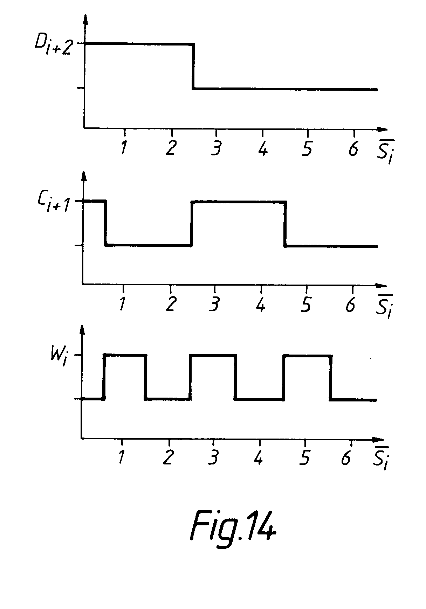

The circuit schematic of the second preferred embodiment of the R7MBC **42** is shown in Figure 13. The corresponding transfer function shown in Figure 14. This is essentially an inverted analog-to-digital conversion of the multivalued sum $S_i$ and would require a considerable number of conventional transistors to implement. The R7MBC **42** quantizes the inputs 0 through 6 into an inverted binary output code. The function of the circuit is essentially the same as the first preferred embodiment of the R7MBC, except that a different reference voltage is generally required.

The preferred values of M-RTD parameters for the second preferred embodiment are generally the same as those for the first preferred embodiment. The preferred values of FET parameters for the second preferred embodiment are generally the same as those for the first preferred embodiment.

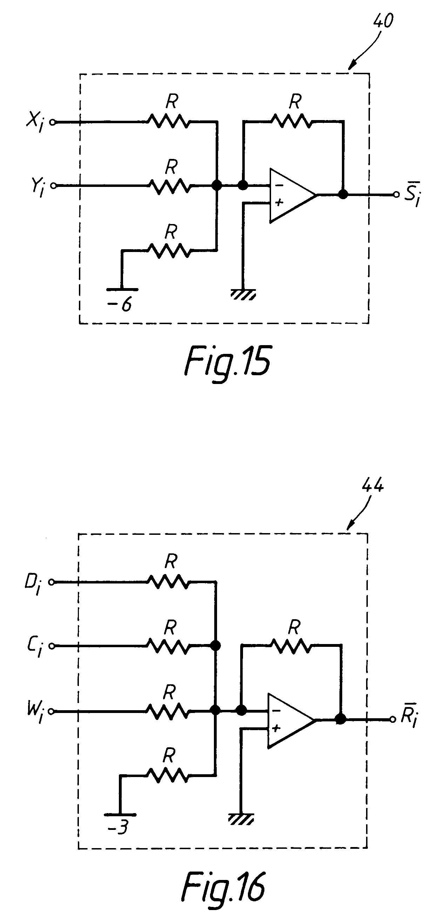

The second preferred embodiment of the two-input summation circuit **40** is shown in Figure 15. The function of this circuit is to produce the inverted partial sum $S_i$. The circuit is an inverting three-input summing amplifier such that $S_i = -(-6) - X_i - Y_i$, or $S_i = 6 - (X_i + Y_i)$, as required by Step 1 for the second preferred embodiment.

The second preferred embodiment of the three-input summation circuit **44** is shown in Figure 16. It is similar to the circuit of Figure 15, except it has an additional input. Its output is $R_i = 3 - (W_i + C_i + D_i)$, as required by Step 2 for the second preferred embodiment.

Table 3, below, provides an overview of some embodiments and the figures.

TABLE 3

| Figure Element | Generic Term | Preferred or Specific Term | Function / Alternate Terms |
|---|---|---|---|
| 40 | Two-input summation circuit | | Summation amplifier; Multi-valued half-adder. |
| 42 | Range-7 Multivalued-to-Binary converter (R7MBC) | | Quantizer; Quasi-Analog-to-Digital Converter |
| 44 | Three-input summation circuit | | Summation amplifier |
| 46 | Redundant positive digit 2,4 adder | | Base-2 Range-4 positive digit adder |
| 48 | Switching device | Depletion mode FET with $V_t$ approximately -0.3 V | Bipolar transistor; Heterojunction bipolar transistor; Field effect transistor |
| 50 | Active Load | Depletion mode FET | Transistor |
| 52 | Multiple-peak Resonant Tunneling Diode (M-RTD) | Three-peak resonant tunneling diode | I-V characteristic exhibits at least three peaks. Negative differential resistance device. |
| 54 | Multiple negative differential transconductance device | Multiple-peak resonant tunneling transistor | Multiple peak resonant tunneling bipolar transistor; Multiple peak resonant tunneling field effect transistor |

| 56 | Folding circuit | Resonant tunneling multi-level folding circuit. | Exhibits a 'square wave' transfer function due to periodic positive and negative differential resistances of constituent resonant tunneling device(s). |
|---|---|---|---|
| 58 | voltage divider | binary weighted resistor ladder | Divides input signal by binary increments; R-2R ladder. |

A few preferred embodiments have been described in detail hereinabove. It is to be understood that the scope of the invention also comprehends embodiments different from those described, yet within the scope of the claims.

Internal and external connections can be ohmic, capacitive, direct or indirect, via intervening circuits or otherwise. Implementation is contemplated in discrete components or fully integrated circuits in silicon, gallium arsenide, or other electronic materials families. It should be understood that various embodiments of the invention can employ or be embodied in hardware, software or microcoded firmware.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. An apparatus for calculating the sum of a first number and a second number, said numbers represented by base-M range-N words, said apparatus comprising a negative differential resistance device.

2. The apparatus of claim 1, wherein N is greater than two.

3. The apparatus of claim 1, wherein said negative differential resistance device is a resonant tunneling device.

4. The apparatus of claim 3, wherein said resonant tunneling device comprises a resonant tunneling diode.

5. The apparatus of claim 1, wherein said negative differential resistance device comprises a resonant tunneling transistor.

6. The apparatus of claim 1, wherein M=2 and N=4.

7. The apparatus of claim 6, wherein the digits of said numbers are positive.

8. The apparatus of claim 7, wherein said sum is represented by a base-2 range-4 word.

9. The apparatus of claim 8, wherein said first number has digits X(0) through X(L) and said second number has digits Y(0) through Y(L), said apparatus further comprising:
   two-input summation circuits A(0), A(1),... A(L), circuit A(i) having a first input equal to X(i) and a second input equal to Y(i) and an output proportional to the sum of its two inputs;
   converters K(0), K(1), ... K(L), converter K(i) having an input connected to said output of A(i) and with a first output W(i) and a second output C(i+1) and a third output D(i+2) for an input of 4D(i+2)+2C(i+1)+W(i), said converter comprising a resonant tunneling device; and
   three-input summation circuits T(1), T(2),... T(L+1), circuit T(i) having a first input connected to D(i) and a second input connected to C(i) and a third input connected to W(i) and an output R(i) proportional to the sum of its three inputs;
   whereby the value of the base-2 word having L+2 digits determined by R(0) through R(L+1), where R(0)=W(0) and R(L+1)=D(L+1), is the sum of said two numbers.

10. The apparatus of claim 9, wherein said converters comprise three resonant tunneling multi-level folding circuits connected by a voltage divider.

11. The apparatus of claim 10, wherein said resonant tunneling multi-level folding circuits comprise a resonant tunneling transistor.

12. The apparatus of claim 11, wherein said resonant tunneling transistor comprises a resonant tunneling diode.

13. The apparatus of claim 12, wherein said resonant tunneling diode exhibits three peaks in its current-voltage characteristic.

14. An apparatus for adding numbers A and B, A and B represented by positive digit base-2 range-4 words X and Y, respectively, X having digits X(0) through X(L) and Y having digits Y(0) through Y(L), said apparatus comprising:

L+1 two-input summation circuits numbered 0 through L, the i'th two-input summation circuit having an input determined by X(i) and an input determined by Y(i) and an output S(i) proportional to X(i)+Y(i);

L+1 converters numbered 0 through L, the i'th converter having an input connected to S(i) and outputs W(i) and C(i+1) and D(i+2) where 4D(i+2)+2C(i+1)+W(i)=S(i), said i'th converter circuit comprising a resonant tunneling device; and

L+1 three-input summation circuits numbered 1 through L+1, the i'th three-input summation circuit having a first input connected to W(i) and a second input connected to C(i) and a third input connected to D(i) and an output R(i) proportional to W(i)+C(i)+D(i);

hereby the sum of said numbers A and B is calculated and is represented by the positive digit base- range-4 word R, R having digits R(0) through R(L+2), where R(0)=W(0), R(L+2)=D(L+2), and the base-10 value of said sum given by

$$\sum_{i=0}^{L+2} 2^i R_{(i)}$$

15. An apparatus for the conversion of a range-N digit into a three digit binary word, said apparatus comprising three resonant tunneling multi-level folding circuits connected by voltage divider circuitry.

16. The apparatus of claim 15, wherein said range-N digit is positive.

17. The apparatus of claim 15, wherein said resonant tunneling multi-level folding circuits comprise a resonant tunneling transistor.

18. The apparatus of claim 17, wherein said resonant tunneling transistor comprises a resonant tunneling diode.

11

Fig.1

Fig.2

Fig. 3

Fig. 4

Fig.5A

Fig.5B

Fig.5C

VOLTAGE (V)
(b)

Fig.6

Fig.7

Fig.8A

Fig.8B

Fig.9

Fig.10

Fig.11

Fig.12

Fig. 13

EP 0 644 480 A2

Fig.14

Fig.15

Fig.16